# EUROPÄISCHE PATENTSCHRIFT

(11) **EP 2 939 511 B1**
(45) Veröffentlichungstag und Bekanntmachung des Hinweises auf die Patenterteilung: **20.07.2016**
(21) Anmeldenummer: 14166850.9
(22) Anmeldetag: 02.05.2014
(51) Int. Cl.: A01C 7/04

(54) **Säherz und Einzelkornsämaschine**
Single grain meter and single grain seeder
Unité doseuse et semeuse mono-graine

(43) Veröffentlichungstag der Anmeldung: 04.11.2015
(73) Patentinhaber: Kverneland AS, 4355 Kvernaland (NO)
(72) Erfinder: Schumacher, Ferdinand, 59510 Lippetal-Oestinghausen (DE); Scheideler, Bernhard, 37688 Beverungen (DE)
(74) Vertreter: Schweiger, Johannes

(56) Entgegenhaltungen:
- EP-A1- 0 046 709
- EP-A1- 0 145 237

## Beschreibung

Die Erfindung betrifft ein Säherz gemäß Patentanspruch 1 und eine Einzelkornsämaschine gemäß Patentanspruch 7.

Säherzen für Einzelkornsämaschinen dienen zur definierten Ausbringung von Saatgut, wobei das Saatgut In der Regel keine definierten Abmessungen aufweist. Darüber hinaus sollen Säherzen möglichst universell für eine Vielzahl von Saatgutarten unterschiedlicher Größe und geometrischer Form einsetzbar sein. Da Saatgut teils sehr teuer ist, soll möglichst wenig Saatgutausschuss produziert werden und möglichst kein Saatgut zerstört werden. Eine große Rolle spielt auch die Ausbringung in einem definierten Abstand und jeweils eines einzelnen Saatgutkorns, damit die Pflanzen sich bis zur Ernte optimal entwickeln können.

Bei der zuverlässigen Vereinzelung des Saatguts auf Sälöchern einer rotierenden Säscheibe kommt es außerdem darauf an, dass ein langfristiger und störungsfreier Einsatz gewährleistet ist. Probleme bereiten nicht nur die oben genannten unterschiedlichen Abmessungen, sondern auch Staub und etwaige Verschmutzungen oder Fremdkörper, die bei gattungsgemäßen Säherzen häufig für Funktionsstörungen verantwortlich zeichnen, insbesondere bei längerem Betrieb. Die EP 0 046 709 A1 offenbart ein Säherz gemäß dem Oberbegriff des Anspruchs 1.

Aufgabe der vorliegenden Erfindung ist es daher, ein Säherz anzugeben, das vielseitig einsetzbar ist und zuverlässig, also möglichst störungsfrei über einen möglichst langen Zeitraum arbeitet.

Diese Aufgabe wird mit den Merkmalen des Patentanspruchs 1 gelöst.

Vorteilhafte Weiterbildungen der Erfindung sind in den Unteransprüchen angegeben.

Grundidee der vorliegenden Erfindung ist es, eine Rührwelle in einem Aufnahmeabschnitt zur Aufnahme des Saatguts an der Säscheibe beziehungsweise im Bereich eines Zulaufs des Saatguts in das Säherz anzuordnen und die Rührwelle modular austauschbar auszubilden. Modular austauschbar heißt insbesondere, dass das Säherz nicht demontiert werden muss, um die Rührwelle auszutauschen. Säherzen sind meist zweiteilig aufgebaut und weisen eine Vielzahl von Anbauten auf, die bei einer Demontage und anschließender Montage aufwendig eingesetzt werden müssen. Modular austauschbar heißt insbesondere, dass das Säherz zum Auswechseln der Rührwelle nicht aus der Einzelkornsämaschine ausgebaut werden muss. Dies ist insbesondere deshalb von Vorteil, weil eine Einzelkornsämaschine meist eine Vielzahl von Säherzen aufweist, nämlich mindestens je ein Säherz pro Säreihe.

Durch den modularen Aufbau ist es erfindungsgemäß möglich, die Rührwelle bei Verschleiß einfach auszutauschen, ohne eine Aufwendige Demontage des Säherzes von der Einzelkornsämaschine und/oder eine Zerlegung des Säherzes durchführen zu müssen. Außerdem können für unterschiedliche Saatgüter verschiedene Rührwellen eingesetzt werden, die insbesondere verschiedene Außenkonturen, vorzugsweise verschiedene Rührnoppen am Umfang, aufweisen.

Gemäß einer bevorzugten Ausführungsform der Erfindung ist vorgesehen, dass die Rührwelle auf eine, insbesondere mit einem Antrieb der Säscheibe, vorzugsweise über ein Kegelradgetriebe, gekoppelte, Antriebswelle aufsteckbar ist. Durch die Kopplung mit der Antriebswelle wird der bauliche Aufwand für das Säherz verringert, da auf einen eigenen Antrieb für die Rührwelle verzichtet werden kann.

In Weiterbildung ist es erfindungsgemäß denkbar, die Antriebswelle mit einem Doppelkugellager in einem, insbesondere in einer Gehäusehälfte des Säherzes eingeformten, Hohlzylinder drehbar anzuordnen. Auf diese Weise kann die Rührwelle zumindest überwiegend, insbesondere ausschließlich, an ihrem antriebsseitigen Ende gelagert werden, sodass der modulare Austausch, insbesondere von dem gegenüberliegenden Ende der Rührwelle her, vereinfacht wird.

Die Antriebswelle besitzt insbesondere ausschließlich einen Freiheitsgrad in Rotationsrichtung, vorzugsweise durch formschlüssigen Einsatz in den Hohlzylinder.

Gemäß einer weiteren vorteilhaften Ausführungsform der vorliegenden Erfindung ist vorgesehen, dass die Rührwelle durch eine, insbesondere gegenüberliegend zum Hohlzylinder angeordnete, Gehäuseöffnung des Säherzes austauschbar ist. Auf diese Weise ist die Rührwelle, insbesondere durch eine lineare Aufsteckbewegung, auf einfache Art und Weise austauschbar.

Mit Vorteil ist die Rührwelle gemäß einer weiteren Ausführungsform der Erfindung mittels eines, insbesondere die Gehäuseöffnung, vorzugsweise dichtend, verschließenden, Deckels drehbar fixierbar. Hierdurch wird ein einfacher Austausch ermöglicht, wobei der Deckel insbesondere gleichzeitig mehrere Funktionen erfüllen kann, nämlich:
a) Verschließen der Gehäuseöffnung, insbesondere dichtend gegenüber der Umgebung und/oder
b) Halterung der Rührwelle in einer Steckrichtung der Rührwelle beziehungsweise in Axialrichtung der Antriebswelle und/oder
c) Führung einer Stirnseite eines Kopfes der Rührwelle und dadurch Stabilisierung des, insbesondere freien, Endes der Rührwelle, das von der Antriebsseite entfernt ist.

Gemäß einem weiteren Erfindungsaspekt weist die Rührwelle einen formkongruent zu einer Innenwand einer Gehäuseöffnung ausgestalteten, insbesondere kreiszylinderförmigen, Kopf auf. Durch die Formkongruenz des Kopfes kann der das Saatgut aufweisende Aufnahmeabschnitt des Säherzes verschlossen werden. Der Kopf ist insbesondere an einer zur Antriebsseite der Rührwelle gerichteten Schulter bündig zu einer Innenwand des Säherzes angeordnet, insbesondere im Bereich des Aufnahmeabschnitts. Der Kopf weist insbesondere ein Spiel gegenüber der Innenwand der Gehäuseöffnung auf, und ist insbesondere gegenüber dieser rotierbar. Das Spiel ist vorzugsweise so bemessen, dass kein Saatgut zwischen der Innenwand der Gehäuseöffnung und dem Kopf eingeklemmt wird.

Hierdurch wird die Montage der Rührwelle auf einfache Art und Weise ermöglicht, bei gleichzeitig zuverlässigem Betrieb der Rührwelle über einen langen Zeitraum.

Weiterhin betrifft die vorliegende Erfindung eine Einzelkornsämaschine mit einer oder mehreren vorbeschriebenen Rührwellen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1a und 1b: perspektivische Ansichten einer Ausführungsform eines Einzelkornsäaggregats einer gattungsgemäßen Einzelkornsämaschine mit einem Säherz in Fahrtrichtung von schräg hinten (Figur 1a) und von schräg vorne (Figur 1b),
- Figur 2a: eine perspektivische Ansicht des Säherzes der Ausführungsform gemäß Figur 1 mit einem Ausbruch zur Darstellung einer Rührwelle und einer teilweise dargestellten Säscheibe mit Sälöchern,
- Figur 2b: eine Seitenansicht des Säherzes gemäß Figur 2a mit geöffnetem Säherz und
- Figur 2c: eine geschnittene Aufsicht des Säherzes gemäß Figur 2a.

In den Figuren sind gleiche Bauteile und Bauteile mit der gleichen Funktion mit den gleichen Bezugszeichen gekennzeichnet.

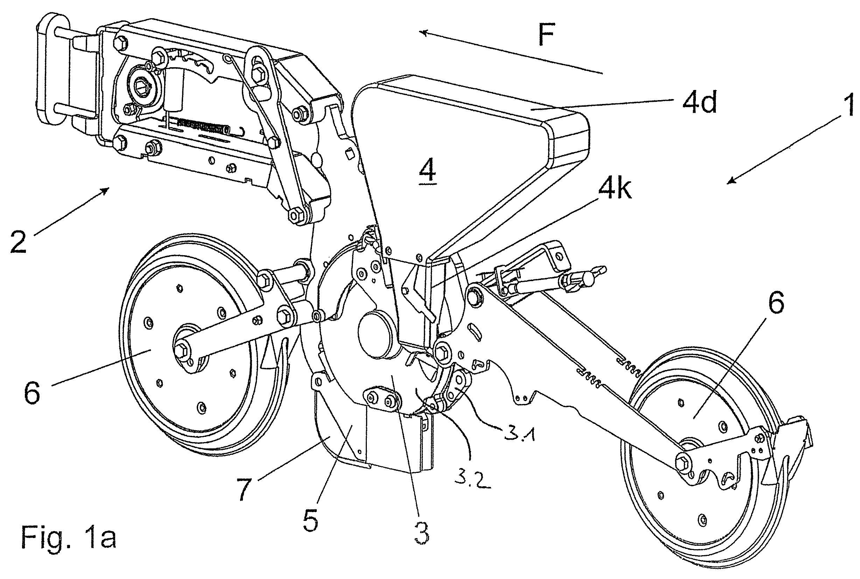

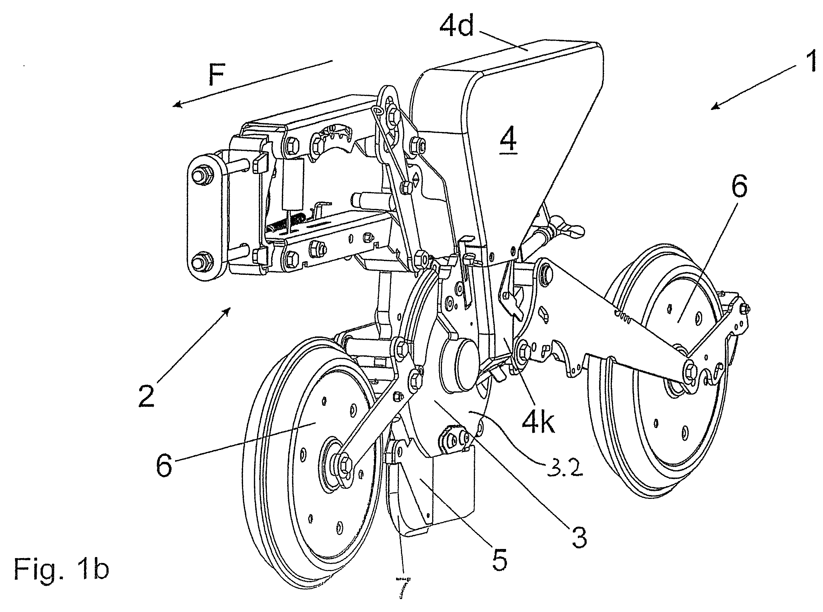

In den Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung bei Betrieb der Einzelkornsämaschine in der durch den Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherz 3 angeordnete, gegenüber dem Säherz 3 schwenkbare Laufräder 6 angebracht. Der Tank 4 ist über einen Deckel 4d verschließbar und mit Saatgut befüllbar, das wiederum über einen Kanal 4k seitlich in das Säherz 3 geführt wird.

Das Saatgut wird im Säherz 3 vereinzelt und über das Säschar 5 in eine durch eine Scharspitze 7 des Säschars 5 geöffnete Furche im Ackerboden abgelegt.

Das Säherz 3 besteht aus einer ersten Hälfte 3.1 und einer zweiten Hälfte 3.2, die ein Säherzgehäuse und einen darin befindlichen Arbeitsraum 8 definieren. Der Arbeitsraum 8 wird durch eine Säscheibe 9 in eine Unterdruckseite und eine Saatgutseite unterteilt.

Konzentrisch zur kreisförmigen Säscheibe 9 sind am Umfang der Säscheibe 9 Sälöcher 15 verteilt (Sälochkreis), durch welche die Druckseite und die Saatgutseite verbunden sind. Ansonsten sind die Druckseite und die Saatgutseite durch die Säscheibe 9 und insbesondere durch entsprechende Dichtungen voneinander abgedichtet.

In der Hälfte 3.2 kommt das Saatgut von dem Tank 4 über einen Zulauf 30 in einem Aufnahmeabschnitt 31 zur Aufnahme des Saatguts an der Säscheibe 9 an. Zumindest im Aufnahmeabschnitt 31 liegt an den Sälöchern 15 ein Unterdruck an, der durch einen Unterdruckbereich der ersten Hälfte 3.1 erzeugt wird. An den Unterdruckbereich ist ein Gebläsemotor angeschlossen, der von einer Säherzsteuerungseinrichtung steuerbar ist.

Die Sälöcher 15 weisen je nach zu vereinzelndem Saatgut geeignete Durchmesser auf, die insbesondere im Bereich von 0,5 mm bis 3 mm liegen.

Idealerweise nimmt jedes Säloch 15 ein einziges Saatkorn auf, was insbesondere wegen der unterschiedlichen Ausprägung der Saatkörner jedes Saatguts in der Praxis nicht immer zu 100 % funktioniert. Je nach verwendetem Saatgut und abhängig von der Einstellung des Säherzes 3 und der Fahrgeschwindigkeit kommt es vor, dass ein Säloch 15 kein Saatkorn oder sogar mehrere Saatkörner aufnimmt. Dies führt an der entsprechenden Sästelle im Ackerboden dazu, das entweder keine Pflanze entsteht oder zum Beispiel zwei Pflanzen, die nicht ausreichend mit Nährstoffen versorgt werden und daher unterentwickelt bleiben.

Besonders kritisch ist es jedoch, wenn einzelne Säaggregate einer Einzelkornsämaschine vollständig ausfallen, beispielsweise durch eine Funktionsstörung oder hohen Verschmutzungsgrad.

Eine Rührnoppen 19, 19' aufweisende Rührwelle 18, 18' zur Verstärkung der Bewegung des Saatguts im Aufnahmeabschnitt 31 ist bevorzugt im Bereich des Zulaufs 30 und/oder am in Rotationsrichtung R liegenden Beginn des Aufnahmeabschnitts 31 angeordnet.

Der Bereich des Zulaufs 30 ist insbesondere mit einer Füllstandsüberwachung (nicht dargestellt) versehen, um einer zu starken Förderwirkung der Rührwelle 18, 18' entgegen zu wirken. Wenn die Füllstandsüberwachung ein entsprechendes Signal gibt, dass sich im Bereich des Zulaufs 30 kein oder zu wenig Saatgut befindet, wird die Drehzahl der Rührwelle 18, 18' reduziert oder die Rotation der Rührwelle 18, 18' gestoppt.

Ein Abstreifer (nicht dargestellt) zum Abstreifen überschüssigen Saatguts von den Sälöchern 15 ist in Rotationsrichtung R vorzugsweise zwischen der Rührwelle 18, 18' und einer Säherzüberwachungseinrichtung (nicht dargestellt) angeordnet, insbesondere näher an der Rührwelle 18, 18' als an der Säherzüberwachungseinrichtung.

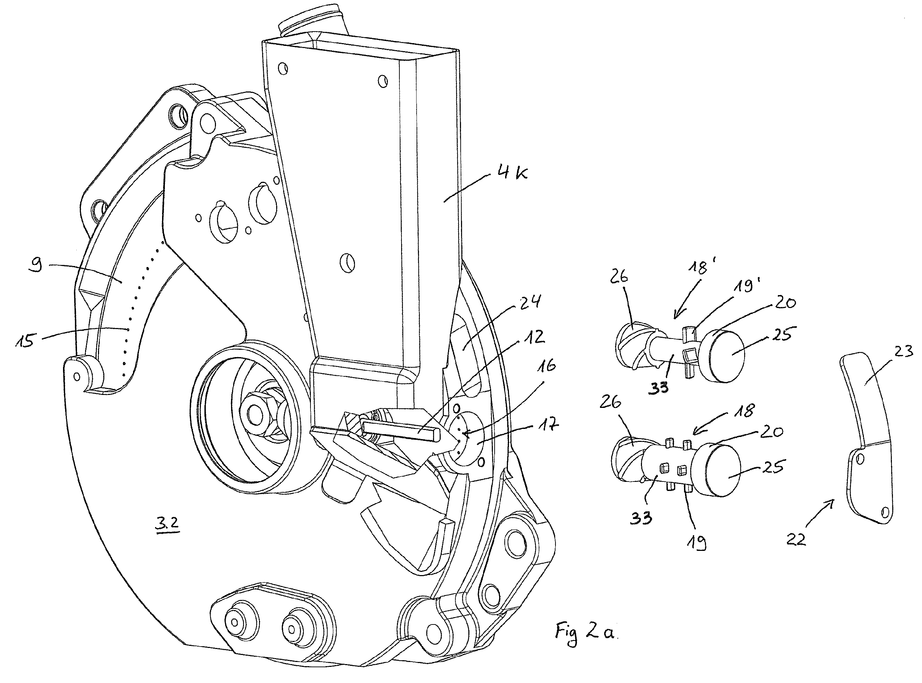

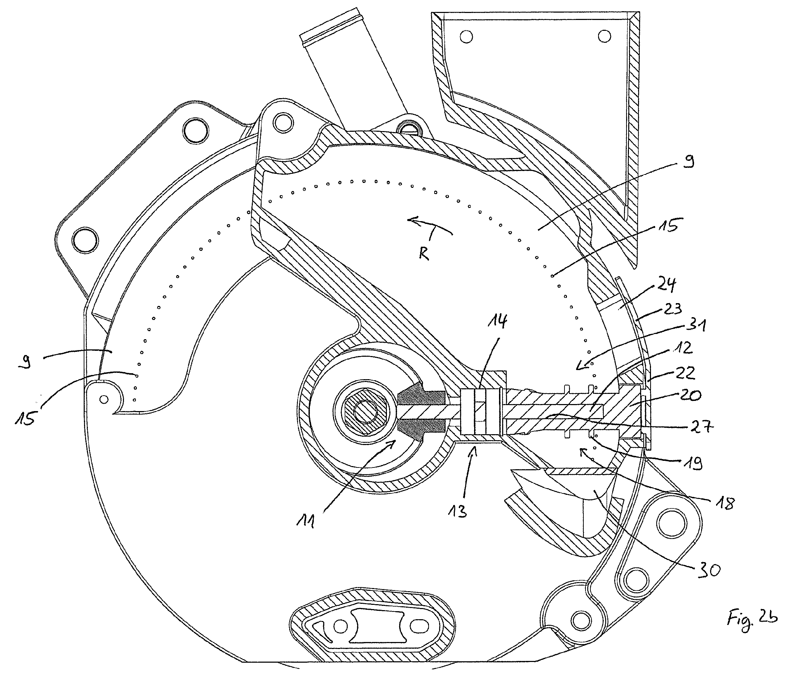

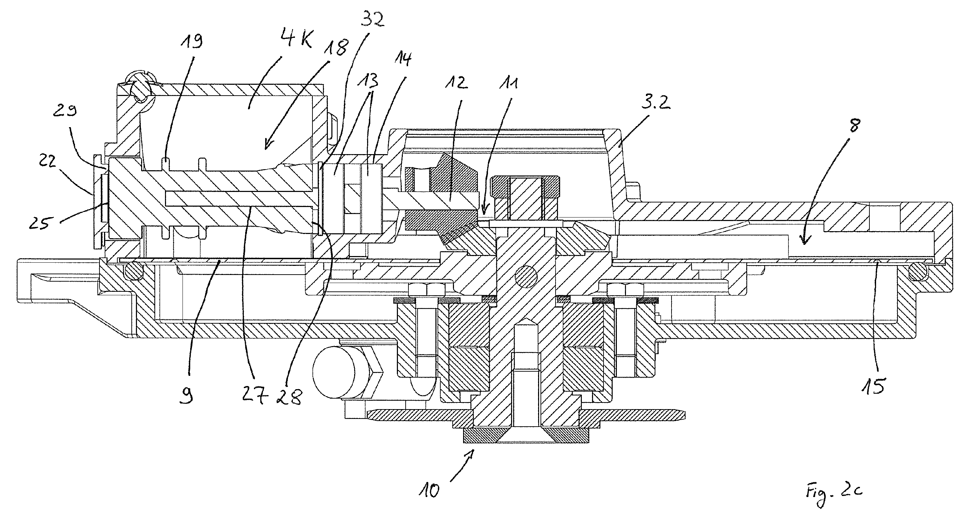

Figur 2a ist zu entnehmen, dass erfindungsgemäß Rührwellen 18, 18' verschiedener Ausführungen in das Säherz 3 einsetzbar sind. Die Ausführung der unteren Rührwelle 18 weist an ihrem Umfang 33 Rührnoppen 19 auf, die sich in Form und Abmessungen von Rührnoppen 19' der in Figur 2a oben dargestellten Rührwelle 18' unterscheiden. Die vier am Umfang 33 der Rührwelle 18' angeordneten Rührnoppen 19' weisen eine Flügelform auf. Abgesehen von der Zahl, Form und Größe der Rührnoppen 19, 19' und/oder des Durchmessers des die Rührnoppen 19, 19' an seinem Umfang aufweisenden Hohlkörpers sind die Rührwellen 18, 18' bevorzugt identisch.

So weisen beide Rührwellen 18, 18' in einer optionalen Ausführung an einem antriebsseitigen Ende eine Schnecke 26 auf. Die Schnecke 26 sorgt bei Rotation der Rührwelle 18, 18' für eine Förderung des Saatguts in Richtung der Rührnoppen 19, 19'. Die Rührnoppen 19, 19' sorgen für eine Durchwirbelung des Saatguts im Aufnahmeabschnitt 31.

Die Rührwelle 18, 18' ist zumindest teilweise, vorzugsweise überwiegend, als Hohlkörper mit einer Aufnahmeöffnung 27 zur Aufnahme einer Antriebswelle 12 ausgebildet. Die Rührwelle 18, 18' ist mit ihrer Aufnahmeöffnung 27 auf die Antriebswelle 12 axial aufsteckbar und weist lediglich in Steckrichtung einen Freiheitsgrad auf. Die Rührwelle 18, 18' ist somit drehfest mit der Antriebswelle 12 verbunden.

An einer die Aufnahmeöffnung 27 umgebenden Anschlagsseite 28 schlägt die Rührwelle 18, 18' an einen Anschlagring 32 eines Hohlzylinders zur Aufnahme eines Doppelkugellagers 13 der Antriebswelle 12, insbesondere dichtend, an. Hierdurch wird verhindert, dass Saatgut von dem Aufnahmeabschnitt 31 in einen Antriebsraum eines Antriebs 10 zum Antrieb der Säscheibe 9 gelangt.

Die Antriebswelle 12 verläuft insbesondere radial parallel zur Säscheibe 9 und/oder orthogonal zu einer Antriebswelle des Antriebs 10 der Säscheibe 9. Die Antriebswelle 12 ist insbesondere über ein Kegelradgetriebe 11 mit dem Antrieb 10 gekoppelt, sodass sich beim Betrieb der Säscheibe 9 also bei Rotation der Säscheibe 9, auch die Rührwelle 18, 18' dreht.

Alternativ ist ein eigener Antrieb zum, insbesondere separat steuer- und/oder regelbaren Antrieb der Antriebswelle 12 vorgesehen.

Am freien Ende der Rührwelle 18, 18' weist diese einen Kopf 20 mit kreiszylinderförmigen Umfang auf, der kongruent zu einer Gehäuseöffnung 16 des Säherzes 3 geformt ist. Der Kopf 20 weist insbesondere ein Spiel gegenüber einer Innenwand 17 der Gehäuseöffnung 16 auf, sodass die Rührwelle 18, 18' durch die Gehäuseöffnung 16 in einer axial zur Antriebswelle 12 verlaufenden Steckrichtung entnommen werden kann.

Die Gehäuseöffnung 16 ist mit einem Deckel 22, insbesondere dichtend, verschließbar. Der Deckel 22 fixiert die Rührwelle 18, 18' auf der Antriebswelle 12 mittels mindestens einem, insbesondere ringförmigem, Vorsprung 29. Der Vorsprung 29 liegt in montiertem Zustand an einer, insbesondere tangential zur Säscheibe 9 und/oder radial zur Antriebswelle 12 verlaufenden, Stirnseite 25 der Rührwelle 18, 18' an. Der Deckel 22 stabilisiert somit gleichzeitig die Rotationsbewegung des freien Endes der Rührwelle 18, 18'.

Der Deckel 22 weist weiterhin ein Sichtfenster 23 auf, das eine Sichtöffnung 24 des Säherzes 3 verschließt. Durch die Sichtöffnung 24 und das Sichtfenster 23 erhält man Einblick in den Betrieb des Säherzes 3 im Inneren des Säherzes 3.

### Bezugszeichenliste

- 1: Säaggregat
- 2: Arm
- 3: Säherz
- 3.1: Hälfte
- 3.2: Hälfte
- 4: Tank
- 4d: Deckel
- 4k: Kanal
- 5: Säschar
- 6: Laufräder
- 7: Scharspitze
- 8: Arbeitsraum
- 9: Säscheibe
- 10: Antrieb
- 11: Kegelradgetriebe
- 12: Antriebswelle
- 13: Doppelkugellager
- 14: Hohlzylinder
- 15: Sälöcher
- 16: Gehäuseöffnung
- 17: Innenwand
- 18, 18': Rührwelle
- 19, 19': Rührnoppen
- 20: Kopf
- 21: Stirnseite
- 22: Deckel
- 23: Sichtfenster
- 24: Sichtöffnung
- 25: Stirnseite
- 26: Schnecke
- 27: Aufnahmeöffnung
- 28: Anschlagseite
- 29: Vorsprung
- 30: Zulauf
- 31: Aufnahmeabschnitt
- 32: Anschlagring
- 33: Umfang
- R: Rotationsrichtung
- F: Fahrtrichtung

## Patentansprüche

1. Säherz für eine Einzelkornsämaschine mit
- einer in einer Rotationsrichtung (R) rotierbaren Säscheibe (9) mit einer Vielzahl von konzentrisch zur Säscheibe (9) entlang mindestens eines Sälochkreises verteilten Sälöchern (15) und
- mindestens einer in einem Aufnahmeabschnitt (31) zur Aufnahme des Saatguts an den Sälöchern (15) der Säscheibe (9) angeordnete Rührwelle (18, 18') zur Bewegung des Saatguts,
**dadurch gekennzeichnet, dass** die Rührwelle (18, 18') modular austauschbar ausgebildet ist.

2. Säherz nach Anspruch 1, bei der die Rührwelle (18, 18') auf eine, insbesondere mit einem Antrieb (10) der Säscheibe (9), vorzugsweise über ein Kegelradgetriebe (11), gekoppelten, Antriebswelle (12) aufsteckbar ist.

3. Säherz nach Anspruch 2, bei der die Antriebswelle (12) mit einem Doppelkugellager (13) in einem, insbesondere in einer Gehäusehälfte (3.2) des Säherzes (3) eingeformten, Hohlzylinder (14) drehbar geführt ist.

4. Säherz nach einem der vorhergehenden Ansprüche, bei der die Rührwelle (18, 18') durch eine, insbesondere gegenüberliegend zum Hohlzylinder (14) angeordnete, Gehäuseöffnung (16) des Säherzes (3) austauschbar ist.

5. Säherz nach Anspruch 4, bei der die Rührwelle (18, 18') mittels eines, insbesondere die Gehäuseöffnung (16), vorzugsweise dichtend, verschließenden, Deckels (22) drehbar fixierbar ist.

6. Säherz nach einem der vorhergehenden Ansprüche, bei der die Rührwelle (18, 18') einen formkongruent zu einer Innenwand (17) einer Gehäuseöffnung (16) ausgestalteten, insbesondere kreiszylinderförmigen, Kopf (20) aufweist.

7. Einzelkornsämaschine mit einem Säherz (3) nach einem der vorhergehenden Ansprüche.

## Claims

1. A seeding heart for a single-grain seeding machine comprising
- a seeding disc (9) rotatable in a rotational direction (R) with a plurality of seeding holes (15) distributed concentrically with respect to the seeding disc (9) along at least one seeding hole circle and
- at least one agitator shaft (18, 18') for the movement of the seed, said agitator shaft (18,18') being disposed in a holding section (31) for holding the seed on the seeding holes (15) of the seeding disc (9),
**characterised in that** the agitator shaft (18, 18') is constituted replaceable in a modular manner.

2. The seeding heart according to claim 1. wherein the agitator shaft (18, 18') can be slipped onto a drive shaft (12) which is coupled in particular with a drive (10) of the seeding disc (9), preferably via a bevel gear (11).

3. The seeding heart according to claim 2, wherein the drive shaft (12) is guided rotatably with a double ball bearing (13) in a hollow cylinder (14) formed in particular in a housing half (3.2) of the seeding heart (3).

4. The seeding heart according to any one of the preceding claims,
wherein the agitator shaft (18, 18') can be replaced through a housing opening (16) of the seeding heart (3) disposed in particular lying opposite to the hollow cylinder (14).

5. The seeding heart according to claim 4, wherein the agitator shaft (18, 18') can be fixed rotatably by means of a cover (22) which in particular can close the housing opening (16), preferably in a sealing manner.

6. The seeding heart according to any one of the preceding claims,
wherein the agitator shaft (18, 18') comprises a, in particular circular cylindrical, head (20) constituted form-congruent with an inner wall (17) of a housing opening (16).

7. A single-grain seeding machine with a seeding heart (3) according to any one of the preceding claims.

## Revendications

1. Distributeur de semoir pour un semoir monograin avec
- un disque d'ensemencement (9) pouvant tourner dans un sens de rotation (R), avec une pluralité d'orifices de semence (15) répartis de manière concentrique au disque d'ensemencement (9) le long d'au moins un cercle de trou de semence, et
- au moins un arbre d'agitation (18, 18') pour déplacer les semences, disposé dans une section de réception (31) pour loger les semences sur les orifices de semence (15) du disque d'ensemencement (9),
**caractérisé en ce que** l'arbre d'agitation (18, 18') est constitué de manière modulaire et interchangeable.

2. Distributeur de semoir selon la revendication 1, pour lequel l'arbre d'agitation (18, 18') peut être emboîté sur un arbre d'entraînement (12), en particulier avec un entraînement (10) du disque d'ensemencement (9), accouplé de préférence par le biais d'un renvoi à pignon conique (11).

3. Distributeur de semoir selon la revendication 2, pour lequel l'arbre d'entraînement (12) est guidé pouvant tourner avec un roulement à billes double (13) dans un cylindre creux (14), formé en particulier dans une moitié de boîtier (3.2) du distributeur de semoir (3).

4. Distributeur de semoir selon l'une quelconque des revendications précédentes, pour lequel l'arbre d'agitation (18, 18') peut être changé à travers une ouverture du boîtier (16) du distributeur de semoir (3), disposée en particulier opposée au cylindre creux (14).

5. Distributeur de semoir selon la revendication 4, pour lequel l'arbre d'agitation (18, 18') peut être fixé pouvant tourner au moyen d'un couvercle (22) fermant en particulier l'ouverture du boîtier (16), de préférence de façon hermétique.

6. Distributeur de semoir selon l'une quelconque des revendications précédentes, pour lequel l'arbre d'agitation (18, 18') comporte une tête (20) en particulier de forme cylindrique circulaire, constituée en complémentarité de forme avec une paroi intérieure (17) d'une ouverture du boîtier (16).

7. Semoir monograin avec un distributeur de semoir (3) selon l'une quelconque des revendications précédentes.
